# EUROPÄISCHE PATENTSCHRIFT

(11) **EP 0 635 991 B1**
(45) Veröffentlichungstag und Bekanntmachung des Hinweises auf die Patenterteilung: **23.12.1998**
(21) Anmeldenummer: 94109665.3
(22) Anmeldetag: 22.06.1994
(51) Int. Cl.: H04Q 11/00, H04L 7/04

(54) **Asynchrone Detektion eines in einem optischen Signal seriell übertragenen Binärwortes**
Asynchronous detection of a serially transmitted optical binary word
Détection asynchrone d'un mot optique binaire transféré en série

(30) Priorität: 21.07.1993 DE 4324482
(43) Veröffentlichungstag der Anmeldung: 25.01.1995
(73) Patentinhaber: SIEMENS AKTIENGESELLSCHAFT, 80333 München (DE)
(72) Erfinder: Osborne, Robert, Dr., D-81731 München (DE)

(56) Entgegenhaltungen:
- EP-A- 0 541 855
- NTT REVIEW, Bd.5, Nr.1, Januar 1993, TOKYO JP Seiten 55 - 61 HABARA ET AL 'Photonic frequency division switching technologies'
- PATENT ABSTRACTS OF JAPAN vol. 16, no. 275 (E-1219) 1992 & JP-A-04 065 997 (NTT)
- JOURNAL OF LIGHTWAVE TECHNOLOGY, Bd.8, Nr.3, März 1990, NEW YORK, US Seiten 478 - 491 SALEHI ET AL 'Coherent ultrashort light pulse code division multiple access communication systems'
- ELECTRONICS LETTERS., Bd.29, Nr.13, 24. Juni 1993, STEVENAGE GB Seiten 1211 - 1212 ZHANG ET AL 'Tunable prime code encoder/decoder for all-optical CDMA applications'

## Beschreibung

Zur leitungsgebundenen Nachrichtenübertragung in Kommunikationssystemen werden in zunehmendem Maße Glasfasern als Übertragungsmedium eingesetzt. Dabei ist die mögliche Übertragungsrate weniger durch die Ubertragungsstrecken als durch die Signalverarbeitung begrenzt. Hier bietet die optische Signalverarbeitung Vorteile bezüglich der Verarbeitungsgeschwindigkeit gegenüber einer Signalverarbeitung, die sich der Verarbeitung von in elektrische Signale umgesetzte Signale bedient.

Die Erfindung betrifft eine Anordnung zur Auswertung von in einem optischen Signal asynchron, seriell übertragenen Binärworten, die eine Kombination von durch hohe bzw. niedrige Intensitätspegel dargestellte Binärzeichen aufweisen.

Aus IEEE LCS MAGAZINE, Mai 1990, Seiten 54 ... 67 ist eine als Korrelator bezeichnete optische Auswerteeinrichtung bekannt, bei dem ein seriell übertragenes optisches Signal auf eine Mehrzahl paralleler Verzögerungsleitungen mit jeweils unterschiedlicher Verzögerungsdauer aufgeteilt wird. Die optischen Leistungen der von den Verzögerungsleitungen abgegebenen Signale werden summiert und einem Schwellwertentscheider zugeführt. Der Schwellwertentschei der gibt bei Überschreitung eines vorgegebenen Schwellwertes seines Eingangssignals ein Ausgangssignal ab und zeigt damit eine Autokorrelationsspitze des optischen Eingangssignals des Korrelators an. Dieser Korrelator bedarf, gemessen an der Anzahl der unterscheidbaren Codewörter, einer langen Codewortlänge, um einen ausreichenden Amplitudenabstand der Autokorrelationsspitze von den durch Kreuzkorrelation bedingten Nebenmaxima zu erzielen, und darüber hinaus eines Schwellwertschalters mit einer hohen oberen Grenzfrequenz zur Erkennung der Autokorrelationsspitze.
Das gleiche gilt auch für eine aus Electronics Letters, November 1990, Vol. 26, Nr. 24, Seiten 1990...1992 bekannten optischen Sende-Empfangseinrichtung, bei der die zu übertragenen Daten senderseitig eine Mehrzahl von Verzögerungsleitungen mit jeweils unterschiedlicher Verzögerungsdauer parallel durchlaufen und empfangsseitig nach Durchlaufen von zu den senderseitigen gleichen Verzögerungsleitungen zu einem Summensignal zusammengefaßt werden. Das Summensignal, dem ein Synchronisationssignal hinzugefügt wird, wird einem Photodetektor zugeführt. Das Signal des Photodetektors wird einem Schwellwertentscheider zugeführt, der bei Überschreiten eines Schwellwertes des zugeführten Signals ein Ausgangssignal abgibt.
Dieser Korrelator vermag gegenüber dem zuvor genannten Korrelator bei der gleichen relativ langen Codewortlänge eine größere Anzahl von Codewörtern zu unterscheiden, allerdings unter Hinnahme des Aufwands für die Synchronisation.

Aus der EP-A1-0 541 855 (EP-91119564.2) ist ein optischer Korrelator bekannt geworden, bei dem ein in einem optischen Signal übertragenes Binärwort asynchron ausgewertet wird, indem das optische Signal einer Mehrzahl von untereinander unterschiedliche Verzögerungsdauern aufweisende Verzögerungsleitungen zugeführt wird, die von den Verzögerungsleitungen abgegebenen optischen Signale jeweils für sich in elektrische Signale umgesetzt werden und das Binärwort durch logische Verknüpfung der elektrischen Signale ausgewertet wird. Dieser Korrelator bedarf für jede Verzögerungsleitung und damit für jedes Binärzeichen einer Umsetzeinrichtung.

Der Erfindung liegt das Problem zugrunde, einen optischen Korrelator anzugeben, der die Nachteile des Standes der Technik vermeidet.

Das Problem wird durch den eingangs umrissenen Korrelator gelöst, bei dem
- eine Mehrzahl von optischen Invertiereinrichtungen eingangsseitig mit dem optischen Signal beaufschlagt sind,
- die von den optischen Invertiereinrichtungen ausgangsseitig abgegebenen optischen Signale untereinander unterschiedliche Wellenlängen aufweisen,
- die von den optischen Invertiereinrichtungen abgegebenen optischen Signale einer Summiereinrichtung zugeführt sind,
- der Ausgang der Summiereinrichtung mit dem Eingang einer wellenlängenselektiven Verzögerungsleitung verbunden ist,
- der Ausgang der Verzögerungsleitung mit dem Eingang einer Detektionseinrichtung verbunden ist,
- die Detektionseinrichtung nur dann ein signifikantes Ausgangssignal abgibt, wenn der Intensitätspegel der summierten optischen Signale an ihrem Eingang niedriger ist als der von einer einzelnen Invertiereinrichtung bedingte Intensitätspegel.

Der erfindungsgemäße Korrelator vereinigt die Vorteile in sich, daß lediglich eine Detektionseinrichtung benötigt wird mit einer erheblich niedrigeren Grenzfrequenz als der ansonsten zur Unterscheidung zwischen Autokorrelationsspitze und Kreuzkorrelation erforderlichen Grenzfrequenz und daß die Detektionseinrichtung weder mit einem Binärwort noch mit irgendeinem Zusatzsignal synchronisiert werden muß.

In weiterer Ausgestaltung der Erfindung sind die von den Invertiereinrichtungen abgegebenen Signale in ihrer Wellenlänge veränderbar. Diese Maßnahme bringt eine rasche Anpaßbarkeit an unterschiedliche, auszuwertende Binärworte mit sich.

In weiterer Ausgestaltung der Erfindung ist in den Signalweg von einzelnen Invertiereinrichtungen jeweils eine zusätzliche Invertiereinrichtung eingefügt. Diese Maßnahme bringt eine Auswertbarkeit wahlfreier Kombinationen von sowohl durch hohe als auch durch niedrige Intensitätspegel dargestellten Binärworten mit sich, wobei zum einen einem nicht-redundanten Code zugehörige Binärworte eindeutig unterscheidbar sind und zum anderen eine Immunität gegen Auswerteergebnisse, die durch fehlerhafte Dauersignale am Eingang bedingt sind, gegeben ist.

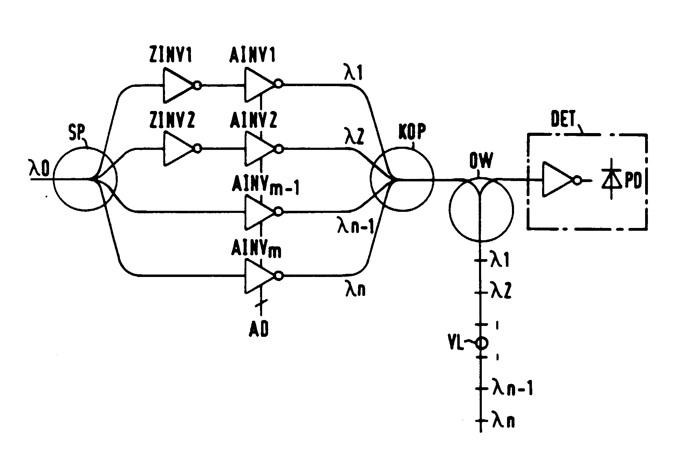

Die Erfindung wird nun als Ausführungsbeispiel in einem zum Verständnis der Erfindung erforderlichen Umfang anhand einer Figur näher beschrieben. Dabei zeigt
- Fig. 1: eine Anordnung zur asynchronen Detektion eines in einem optischen Signal seriell übertragenen Binärwortes, dessen Binärzeichen durch hohe bzw. niedrige Intensitätspegel dargestellt sind.

Ein mit einer Wellenlänge λ0 übertragenes optisches Eingangssignal wird mit Hilfe einer Verzweigungseinrichtung SP über Glasfaserleitungen einer Mehrzahl von abstimmbaren Invertiereinrichtungen AINV1 ... AINVm zugeführt, wobei den abstimmbaren Invertiereinrichtungen AINV1 und AINV2 das Eingangssignal jeweils über eine zusätzliche Invertiereinrichtung ZINV1,2 zugeführt wird. Die optischen Invertiereinrichtungen weisen folgende Eigenschaften auf:

Wird der optischen Invertiereinrichtung eingangsseitig ein optisches Signal mit einer oberhalb einer vorgegebenen Schwelle liegenden Intensität zugeführt, so gibt sie ausgangsseitig kein optisches Signal ab. Wird der optischen Invertiereinrichtung ein optisches Signal mit einer unterhalb der vorgegebenen Schwelle liegenden Intensität zugeführt, so gibt sie ausgangsseitig ein optisches Signal hoher Intensität ab. Die Invertiereinrichtungen können durch beispielsweise in B. Glance, J. Wiesenfeld "Optical Wavelength Shifter for Wavelength-Division-Multiplexed Networks", Optics and Photonics News, Dec. 1992, page 31, beschriebene optische Inverter gegeben sein. Bei der vorliegenden Anwendung machen sich die hohe Schaltgeschwindigkeit, die hohe Intensität des am Ausgang abgegebenen optischen Signals und eine relativ niedrige, zur Uberschreitung der vorgegebenen Schwelle erforderliche Intensität des eingangsseitig zugeführten Signals vorteilhaft bemerkbar. Die abstimmbaren Invertiereinrichtungen weisen die weitere Eigenschaft auf, daß die Wellenlänge des von einer jeweiligen abstimmbaren Invertiereinrichtung ausgangsseitig abgegebenen optischen Signals über eine Adreßleitung AD eingestellt werden kann. Die von den abstimmbaren Invertiereinrichtungen ausgangsseitig abgegebenen optischen Signale mit den Wellenlänger λl ... λn werden in einem herkömmlichen n x 1-Koppler KOP zu einem optischen Summensignal zusammengeführt. Das Summensignal wird über eine herkömmliche optische Weiche OW einer wellenlängenselektiven Verzögerungsleitung VL zugeführt. Die Verzögerungsleitung bewirkt für optische Signale mit unterschiedlichen Wellenlängen unterschiedliche Verzögerungsdauern. Im Ausführungsbeispiel ist die Verzögerungsleitung mit einem Wellenleiter gebildet, in den an den mit λl ... λn bezeichneten Stellen wellenlängenselektive Reflexionsfilter eingebracht sind. Solche Verzögerungsleitungen sind beispielsweise aus Application Physical Letters 32 (10), 15 May 1978, pages 647 ... 649, "Photosensitivity in Optical Fibre Waveguides: Application to Reflection Filter Fabrication", oder aus Electronics Letters 18, March 1993, Vol. 29, No. 6, pages 566... 568, "Production of In-Fibre-Gratings Using a Diffractive Optical Element" bekannt. Die Verzögerung eines Signals mit einer gegebenen Wellenlänge ergibt sich aus der Laufzeit von der Wellenleitereinkopplung zum entsprechenden Reflexionsfilter und zurück. Die reflektierten optischen Signale verlassen die Verzögerungsleitung über die optische Weiche und werden dem Eingang einer Detektionseinrichtung DET zugeführt. Erfindungsgemäß gibt die Detektionseinrichtung nur dann ein signifikantes Ausgangssignal ab, wenn die Intensität, d.h. die Leistung der summierten optischen Signale, niedriger ist als der Intensitätspegel, der durch eine einzelne, ausgangsseitig augenblicklich einen hohen Intensitätspegel abgebende abstimmbare Invertiereinrichtung bedingt ist. Zur Erfüllung dieser Bedingung ist die vorgegebene Schwelle der Detektionseinrichtung so eingestellt, daß sie erst bei einem eingangsseitigen optischen Signal mit einer niedrigeren Intensität als der durch eine einzelne abstimmbare Invertiereinrichtung bedingten Intensität, beispielsweise erst unterhalb einer Intensität, die der Hälfte der hohen Intensität eines einzelnen optischen Signals entspricht, ein signifikantes Signal an ihrem Ausgang abgibt. Die Detektionseinrichtung kann beispielsweise durch eine oben näher beschriebene Invertiereinrichtung mit nachgeschalteter Fotodiode und Auswerteeinrichtung gegeben sein. Alternativ dazu kann die Detektionseinrichtung durch eine Fotodiode und eine nachgeschaltete Auswerteeinrichtung mit Schwellencharakteristik gegeben sein.

Das der Erfindung zugrunde liegende Prinzip beruht darauf, daß die vorgegebene Kombination von seriell übertragenen Bits jedenfalls in durch niedrige Intensität dargestellte Bits umgesetzt werden und die umgesetzten Bits entsprechend der Rangfolge innerhalb des optischen Signals verzögert werden; nur bei einem Auftreten der vorgegebenen Kombination in dem optischen Signal überlagern sich die umgesetzten und entsprechend verzögerten Bits zu einem optischen Signal mit einer Intensität, die niedriger ist als der von einer einzelnen abstimmbaren Invertiereinrichtung abgegebene hohe Intensitätspegel. Die charakteristischen Bits der vorgegebenen Kombination von Bits werden zunächst also in optische Signale mit einem niedrigen Intensitätspegel umgesetzt. Bits des Eingangssignals, die einen hohen Intensitätspegel aufweisen, werden jeweils lediglich in einer abstimmbaren Invertiereinrichtung, beispielsweise in den abstimmbaren Invertiereinrichtungen AINVn-1, AINVn weiterbehandelt, während die einen niedrigen Intensitätspegel aufweisenden Bits des Eingangssignals jeweils in einer abstimmbaren Invertiereinrichtung und einer zusätzlichen Invertiereinrichtung, beispielsweise in der AINV1 und ZINV1 bzw. in der AINV2 und ZINV2, behandelt werden. Anschließend werden die charakteristischen Bits entsprechend ihrer zeitlichen Rangfolge in dem Eingangssignal derart verzögert, daß sie zeitgleich am Eingang der Detektionseinrichtung auftreten. Zur Erfüllung dieser Bedingung wird ein als erstes auftretendes Bit der Kombination entsprechend länger verzögert als ein demgegenüber später auftretendes Bit. Die erzielbaren Verzögerungsdauern sind durch die Anordnung der in der Verzögerungsleitung vorgegebenen Reflexionsfilter vorgegeben. Die Reflexionsfilter sind in der Verzögerungsleitung vorzugsweise in einem solchen Abstand angeordnet, daß der Unterschied der Verzögerungsdauer zwischen zwei benachbarten Reflexionsfiltern einer Bitdauer gleicht. Ein in dem Eingangssignal enthaltenes charakteristisches Bit der Kombination mit einem niedrigen Intensitätspegel wird nach Durchlaufen einer zusätzlichen Invertiereinrichtung am Ausgang der nachfolgenden abstimmbaren Invertiereinrichtung mit der Wellenlänge weitergeleitet, bei der das Bit entsprechend seiner zeitlichen Rangfolge innerhalb der Kombination zeitglich mit sämtlichen anderen charakteristischen Bits der Kombination am Eingang der Detektionseinrichtung eintrifft. Entsprechend wird ein in dem Eingangssignal enthaltenes charakteristisches Bit der Kombination mit einem hohen Intensitätspegel nach Durchlaufen nur einer abstimmbaren Invertiereinrichtung mit einer Wellenlänge weitergeleitet, bei der das Bit entsprechend seiner zeitlichen Rangfolge innerhalb der Kombination zeitgleich mit sämtlichen anderen charakteristischen Bits der Kombination am Eingang der Detektionseinrichtung eintrifft. Die Einstellung der erforderlichen, am Ausgang einer abstimmbaren Invertiereinrichtung abgegebenen Wellenlänge erfolgt über eine mit dieser abstimmbaren Invertiereinrichtung verbundenen Adreßleitung AD.

Bei der beschriebenen Anordnung ist die auswertbare Anzahl von charakteristischen Bits einer Kombination durch die Anzahl der abstimmbaren Invertiereinrichtungen gegeben. Ist die Anzahl der auswertbaren Bits kleiner als die Anzahl der abstimmbaren Invertiereinrichtungen, so können nicht benötigte abstimmbare Invertiereinrichtungen über die Adreßleitung inaktiv geschaltet werden. Inaktiv geschaltete abstimmbare Invertiereinrichtungen weisen an ihrem Ausgang einen niedrigen Intensitätspegel auf. Der maximale zeitliche Abstand zwischen dem zeitlich ersten und dem zeitlich letzten charakteristischen Bit, der mit der beschriebenen Anordnung auswertbar ist, ist durch den Unterschied zwischen der kürzesten und der längsten Verzögerungsdauer der Verzögerungsleitung gegeben.

Mit der beschriebenen Anordnung können prinzipiell beliebige, durch hohe bzw. niedrige Intensitätspegel dargestellte Kombinationen von Bits, die asynchron übertragen werden, ausgewertet werden.

## Patentansprüche

1. Anordnung zur Auswertung von in einem optischen Signal asynchron, seriell übertragenen Binärworten, die eine Kombination von durch hohe oder niedrige Intensitätspegel dargestellte Binärzeichen aufweisen,
**dadurch gekennzeichnet**, daß
- eine Mehrzahl von optischen Invertiereinrichtungen (AINV1 ... AINVm) eingangsseitig mit dem optischen Signal (λ0) beaufschlagt sind,
- die von den optischen Invertiereinrichtungen ausgangsseitig abgegebenen optischen Signale untereinander unterschiedliche Wellenlängen (λ1 ... λn) aufweisen,
- die von den optischen Invertiereinrichtungen abgegebenen optischen Signale einer Summiereinrichtung (KOP) zugeführt sind,
- der Ausgang der Summiereinrichtung mit dem Eingang einer wellenlängenselektiven Verzögerungsleitung (VL) verbunden ist,
- der Ausgang der Verzögerungsleitung mit dem Eingang einer Detektionseinrichtung (DET) verbunden ist,
- die Detektionseinrichtung nur dann ein signifikantes Ausgangssignal abgibt, wenn der Intensitätspegel der summierten optischen Signale an ihrem Eingang niedriger ist als der von einer einzigen Invertiereinrichtung bedingte Intensitätspegel.

2. Anordnung nach Anspruch 1,
**dadurch gekennzeichnet**,
daß die von den Invertiereinrichtungen abgegebenen Signale in ihrer Wellenlänge veränderbar sind.

3. Anordnung nach einem der vorstehenden Ansprüche,
**dadurch gekennzeichnet,**
daß in den Signalweg von einzelnen Invertiereinrichtungen jeweils eine zusätzliche Invertiereinrichtung eingefügt ist.

## Claims

1. Arrangement for evaluating binary words which are transmitted asynchronously and serially in an optical signal and which have a combination of binary elements represented by high or low intensity levels, characterized in that
- the optical signal (λ0) is applied to a plurality of optical inversion means (AINV1 ... AINVm) on the input side,
- the optical signals output by the optical inversion means on the output side have different wavelengths (λ1 ... λn) from one another,
- the optical signals output by the optical inversion means are supplied to a summing means (KOP),
- the output of the summing means is connected to the input of a wavelength-selective delay line (VL),
- the output of the delay line is connected to the input of a detection means (DET),
- the detection means only outputs a significant output signal if the intensity level of the summed optical signals at its input is lower than the intensity level caused by a single inversion means.

2. Arrangement according to Claim 1, characterized in that the wavelength of the signals output by the inversion means is variable.

3. Arrangement according to one of the preceding claims, characterized in that an additional inversion means is inserted in each case into the signal path of single inversion means.

## Revendications

1. Dispositif pour l'évaluation de mots binaires, transmis en série et de manière asynchrone dans un signal optique, qui présentent une combinaison de signes binaires représentés par des niveaux d'intensité hauts ou bas,
caractérisé par le fait que
- plusieurs dispositifs inverseurs optiques (AINV1 à AINVm) reçoivent en entrée le signal optique (λ0),
- les signaux optiques délivrés en sortie par les dispositifs inverseurs optiques ont chacun une longueur d'onde différente (λ1 à λn),
- les signaux optiques délivrés par les dispositifs inverseurs optiques sont envoyés à un dispositif additionneur (KOP),
- la sortie du dispositif additionneur est reliée à l'entrée d'une ligne à retard (VL) à sélection de longueur d'onde,
- la sortie de la ligne à retard est reliée à l'entrée d'un dispositif de détection (DET),
- le dispositif de détection ne délivre un signal de sortie significatif que si le niveau d'intensité des signaux optiques additionnés présents à son entrée est inférieur au niveau d'intensité conditionné par un seul dispositif inverseur.

2. Dispositif selon la revendication 1,
caractérisé par le fait que
la longueur d'onde des signaux délivrés par les dispositifs inverseurs peut être modifiée.

3. Dispositif selon l'une des revendications précédentes,
caractérisé par le fait que
un dispositif inverseur supplémentaire est inséré à chaque fois dans la voie de signal de dispositifs inverseurs individuels.
